# EUROPEAN PATENT APPLICATION

(11) **EP 2 518 609 A1**
(43) Date of publication of application: **31.10.2012**
(21) Application number: 11007836.7
(22) Date of filing: 27.09.2011
(51) Int. Cl.: G06F 3/048, G06F 3/033

(54) **Portable electronic device and method for controlling the same**

(30) Priority: 27.04.2011 TW 00114719
(71) Applicant: ACER Inc., Hsichih Tapei Hsien 221 (TW)
(72) Inventor: Sip, Kim-Yeung, 221 Tapei Hsien (TW)
(74) Representative: Altenburg, Bernardus Stephanus Franciscus

(57) **Abstract**

A portable electronic device (1) is disclosed. The portable electronic device (1) comprises a portable electronic device body (11), a display device (12), at least one touch device (13) and a controller (14). The display device (12) is used for displaying a display (121). The at least one touch device (13) is disposed on an outside of the portable electronic device body (11), the at least one touch device (13) is used for receiving a touch signal, wherein the touch signal comprises a position information, and the controller (14) is electrically connected with the at least one touch device (13); when the at least one touch device (13) receives the touch signal, the display device (12) displays a plurality of tags (21, 22, 23, 24, 25, 26), wherein the position information corresponds to one of the positions of the plurality of tags (21, 22, 23, 24, 25, 26), the controller (14) chooses and executes one of the functions of the plurality of tags (21, 22, 23, 24, 25, 26) according to the touch signal.

## Description

### BACKGROUND OF THE INVENTION

### 1. Field of the Invention

The present invention relates to a portable electronic device and a method for controlling the portable electronic device, and more particularly, to a portable electronic device and a method for controlling the portable electronic device which can improve the operation of the Home key.

### 2. Description of the Related Art

Presently, most portable electronic devices, especially smart phones or tablet PCs, comprise a physical Home key or a touch area for the Home key, which is provided for a user to return to the home page when the user presses the Home key of a portable electronic device. For now, the Home key is always disposed at a front side of the portable electronic device (usually at the bottom thereof), so when the user is holding the portable electronic device with one hand, he/she has to use the other hand to press the Home key, which makes it inconvenient to use the portable electronic device and takes up precious space of the display.

Besides, the portable electronic device is disposed with a plurality of folders or pages as a default setting or by the user, when the user wants to look for an object which is hidden inside a plurality of folders or a page, he/she has to go back to the home page first or go to a corresponding program page and clicks folder after folder to find the object. It is also inconvenient to the user.

Therefore, it is necessary to provide a portable electronic device a method for controlling the portable electronic device to solve the problems encountered in the prior art.

### SUMMARY OF THE INVENTION

It is an object of the present invention to provide a portable electronic device a method for controlling the portable electronic device.

In order to achieve above objects, the present invention discloses a portable electronic device comprising a portable electronic device body, a display device, at least one touch device, and a controller. The display device is disposed on the portable electronic device body and used for displaying a display; the at least one touch device is disposed on an outside of the portable electronic device body, the at least one touch device is used for receiving a touch signal, wherein the touch signal comprises a position information; and the controller is electrically connected with the at least one touch device; when the at least one touch device receives the touch signal, the at least one touch device displays a plurality of tags, wherein the position information corresponds to one of the positions of the plurality of tags; and the controller chooses and executes one of the functions of the plurality of tags according to the touch signal.

In an embodiment of the present invention, the plurality of tags is substantially arranged in an order on a side of the display, each one of the plurality of tags comprises a page, when the position information corresponds to one of the positions of the plurality of tags, the controller displays the page corresponding to the tag of the position according to the touch signal.

In order to achieve above objects, the present invention discloses a portable electronic device comprising a portable electronic device body, a display device, at least one touch device, and a controller, wherein the display device is disposed on the portable electronic device body and used for displaying a display; the at least one touch device is disposed on an outside of the portable electronic device body. The present invention discloses a method for controlling a portable electronic device, wherein the method comprises the following steps: displaying a plurality of tags on the display, wherein the plurality of tags is substantially arranged in the display; receiving a touch signal by the at least one touch device, wherein the touch signal comprises a position information corresponding to one of the positions of the plurality of tags; and choosing and executing one of the functions corresponding to one of the plurality of tags according to the touch signal.

In an embodiment of the present invention, the at least one touch device comprises two or more than two touch devices, each one of the at least one touch device is disposed respectively and differently at each side of the portable electronic device body.

### BRIEF DESCRIPTION OF THE DRAWINGS

FIG.1 illustrates a view of an embodiment of a portable electronic device of the present invention;
FIG.2 illustrates a structural view of an embodiment of the portable electronic device of the present invention;
FIG.3 illustrates a view of an embodiment of a side of the portable electronic device of the present invention;
FIG.4 illustrates a flow chart of an embodiment of a method for controlling the portable electronic device of the present invention;
FIG.5 to FIG.7 illustrate operational views of an embodiment of the method for controlling the portable electronic device of the present invention;
FIG.8 8 illustrates a flow chart of an embodiment of the method for controlling the portable electronic device of the present invention;
FIG.9 9 illustrates an operational view of an embodiment of the method for controlling the portable electronic device of the present invention; and
FIG.10 illustrates an operational view of an embodiment of the method for controlling the portable electronic device of the present invention.

### DETAILED DESCRIPTION OF THE PREFERRED EMBODIMENT

The advantages and innovative features of the invention will become more apparent from the following detailed description when taken in conjunction with the accompanying drawings.

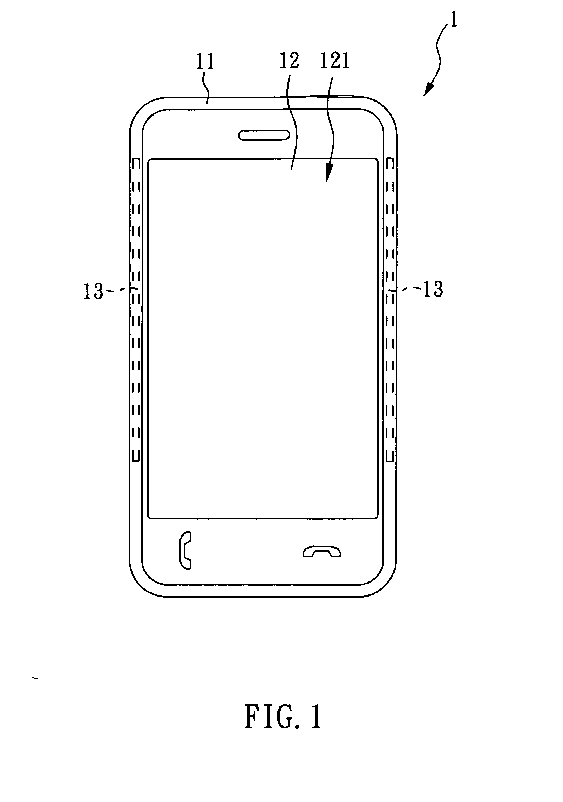

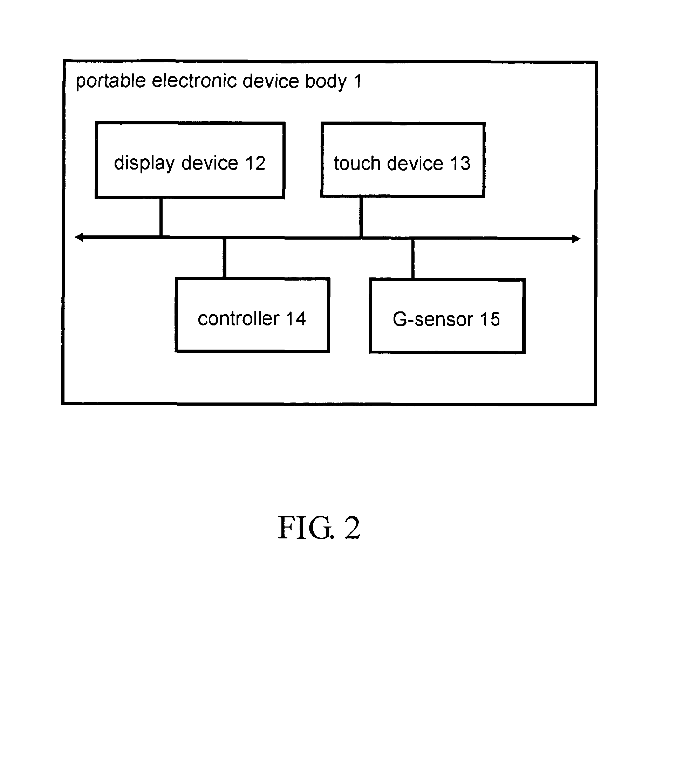

Please refer to FIG.1 and FIG.2. FIG.1 illustrates a view of an embodiment of a portable electronic device of the present invention; and FIG.2 illustrates a structural view of an embodiment of the portable electronic device of the present invention.

As shown in FIG.1, in an embodiment of the present invention, the portable electronic device 1 can be a smart phone, a personal digital assistant (PDA), a tablet PC, or the like; the portable electronic device 1 comprises a display device 12.

As shown in FIG.1 and FIG.2, the portable electronic device 1 comprises a portable electronic device body 11, a display device 12, two touch devices 13, a controller 14, and a G-sensor 15. The display device 12 is disposed on the portable electronic device body 11 and is used for displaying a display 121. In an embodiment of the present invention, the display device 12 can be a touch screen, and more particularly, the display device 12 can be a capacitive touch screen, or the display device 12 can be a resistive touch screen, an optics touch screen, a surface acoustic wave touch screen, or an electromagnetic touch screen or the like.

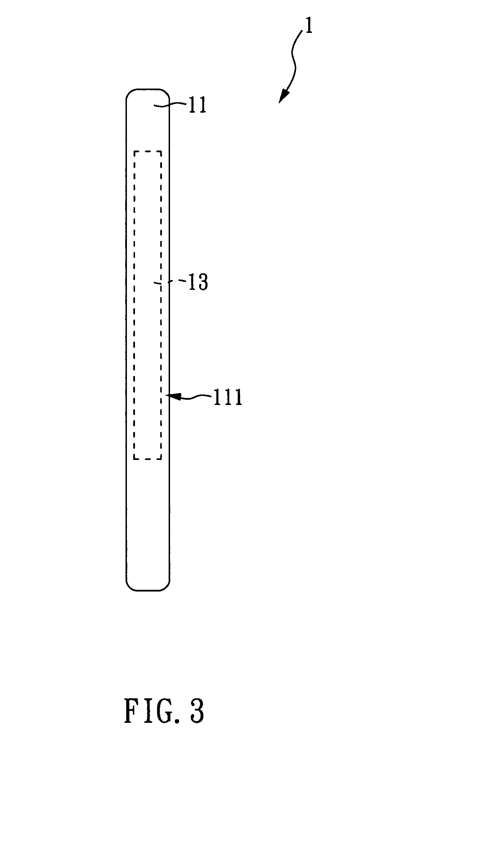

As shown in FIG.1, each touch device 13 is respectively and differently disposed either on the right side or the left side of the portable electronic device body 11. As shown in FIG.3, in an embodiment of the present invention, each touch device 13 is disposed in a side case 111 of the portable electronic device body 11 and can receive a touch signal generated by a user when the user touches the right side or the left side of the portable electronic device body 11. In an embodiment of the present invention, each touch device 13 can be a capacitive touch sensor, and each touch device 13 can be implemented in the side case 111 by extending a transparent electrode (made of Indium tin oxide (ITO)) of the display device 12, wherein the side case 111 of the portable electronic device body 11 can be designed to allow the finger of the user or a conducting object to generate a capacitive effect with the transparent electrode when the user uses his/her finger or the conducting object to touch the side case 111. The operations and the techniques of the capacitive touch screen are not further described as they are known in the art. The touch device 13 can be a capacitive touch sensor or other types of touch sensors, for example, the touch device 13 can be a resistive touch sensor, an optics touch sensor, a surface acoustic wave touch sensor, or an electromagnetic touch sensor or the like. It is noted that the touch devices 13 can also be disposed at other places such as all the sides of the portable electronic device body 11, and the number of the touch devices 13 can be more than 2.

The G-sensor 15 is electrically connected with the controller 14; the G-sensor 15 is used for detecting a rotating angle of the portable electronic device body 11. The controller 14 changes a rotating angle of the display 121 according to the rotating angle of the portable electronic device body 11 to correspond with a viewing angle of the user. The controller 14 is electrically connected with the display device 12, each touch device 13, and the G-sensor 15; and the controller 14 controls the operations of the devices mentioned above. In an embodiment of the present invention, the controller 14 can be a central processing unit (CPU), a micro control unit (MCU), or an embedded controller (EC) or the like.

In the following, FIG1 to FIG.3 are used to illustrate a method for controlling the portable electronic device 1; it is noted that the method disclosed in the present invention can be applied in other devices other than portable electronic device 1 as long as it can achieve the objects of the present invention.

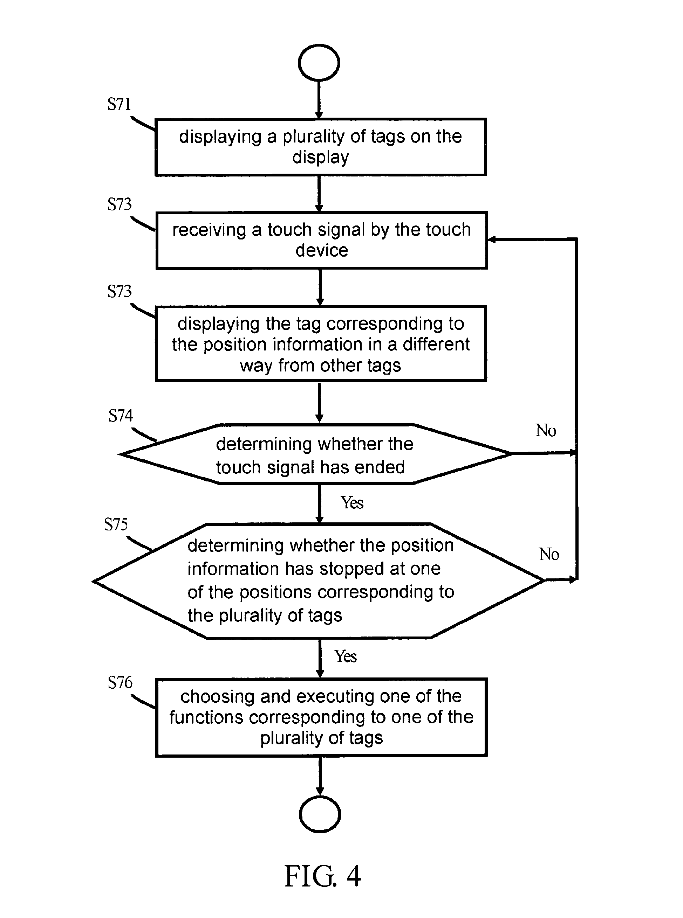

As shown in FIG.4, the method for controlling the portable electronic device 1 starts at step S71: displaying a plurality of tags on the display.

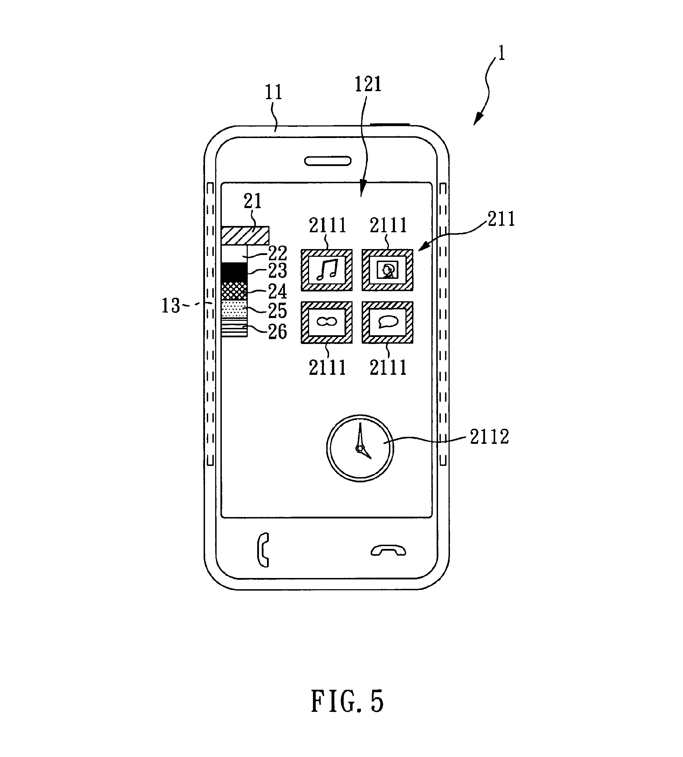

As shown in FIG.5, the plurality of tags 21-26 are arranged at the left side of the display 121; the plurality of tags 21-26 can be arranged at some other places in the display 121, for example, the plurality of tags 21-26 can be arranged at the upper, right, or lower side of the display 121. In an embodiment of the present invention, the positions of the plurality of tags 21-26 correspond to the touch device 13 on the left side of the portable electronic device body 11.

As shown in FIG.5, in an embodiment of the present invention, each one of the plurality of tags 21-26 is represented by a specific color and has its own corresponding page, wherein each page comprises at least one icon or no icon, and each icon corresponds to an application or a file. In an embodiment of the present invention, the tag 21 is a Home tag, which comprises a Home page 211, and the Home page 211 comprises a plurality of icons 2111 and widgets 2112. The plurality of icons 2111 in the Home page 211 can be frequently used applications, files or widgets, and so on.

It is noted that the plurality of tags 21-26 can be represented by folders or other marks, and the number of the plurality of tags 21-26 does not limit to six as that shown in FIG.5.

Then the method goes to step S72: receiving a touch signal by the touch device.

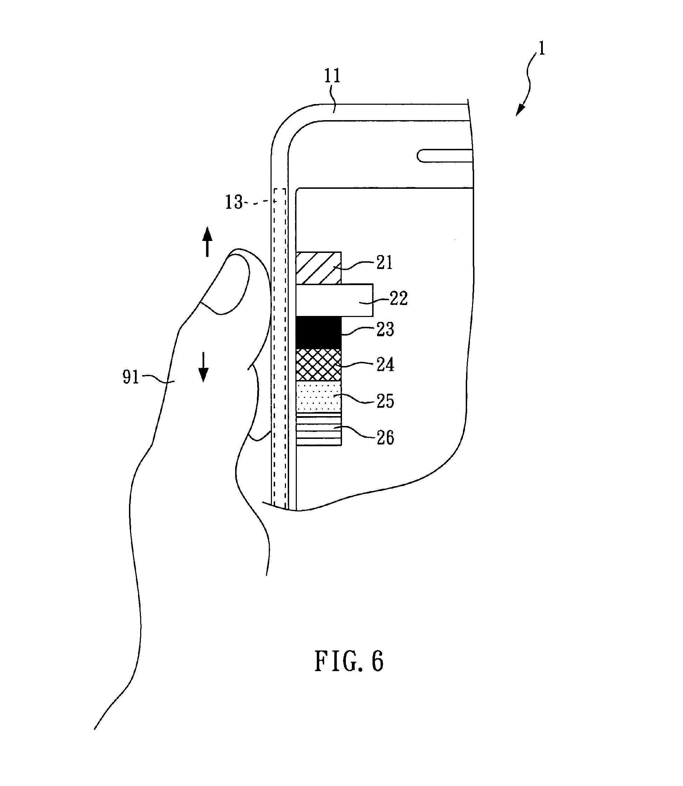

As shown in FIG.6, when the user uses his/her left hand to hold the portable electronic device 1, the user can use his/her thumb 91 (or other conducting object) to operate the touch device 13 on the left side of the portable electronic device body 11; when the thumb 91 touches the touch device 13, a touch signal is generated, then the touch device 13 receives and analyzes the touch signal, wherein the touch signal comprises a position information regarding the position where the thumb 91 touches the touch device 13. It is noted that at this time the touch device 13 on the right side of the portable electronic device body 11 is disabled to prevent accidental touching. In another embodiment of the present invention, the plurality of tags 21-26 can be hidden, when the touch device 13 does not receive a touch signal, the plurality of tags 21-26 are hidden; when the touch device 13 receives a touch signal, the plurality of tags 21-26 are then shown on the user interface; in addition to hiding the tags, there are other ways to dispose the plurality of tags 21-26.

Then the method goes to step S73: displaying the tag corresponding to the position information in a different way from other tags.

As shown in FIG.5, when the display 121 display a page corresponding to the tag 21, the controller 14 presents the tag 21 in a different way from other tags; in an embodiment of the present invention, the tag 21 protrudes from other tags to let the user know what tag and also its page are currently shown in the display 121. It is noted that there are other ways to highlight the tag such as enlarging or deforming the tag.

As shown in FIG.6, when the thumb 91 keeps touching the touch device 13 and stays at the position corresponding to the tag 22, the controller 14 let the tag 22 protrude from other tags according to the position information. It is noted that the thumb 91 can move up and down to let one of the tags protrude from others successively.

Then the method goes to step S74: determining whether the touch signal has ended.

In step S74, the controller 14 determines whether the touch signal has ended, that is, the controller 14 determines whether the thumb 91 no longer touches the touch device 13.

If the controller 14 determines the touch signal has ended, then the method goes to step S75: determining whether the position information has stopped at one of the positions corresponding to the plurality of tags.

In step S75, when the touch signal ended, the controller 14 determines whether the last position touched by the thumb 91 is one of the positions corresponding to the plurality of tags, for example, when the last position on the touch device 13 touched by the thumb 91 corresponds to the tag 22, then the controller 14 determines that the position information has stopped at one of the positions corresponding to the plurality of tags.

If the controller 14 determines that the position information has stopped at one of the positions corresponding to the plurality of tags 21-26, then the method goes to S76: choosing and executing one of the functions corresponding to one of the plurality of tags according to the touch signal.

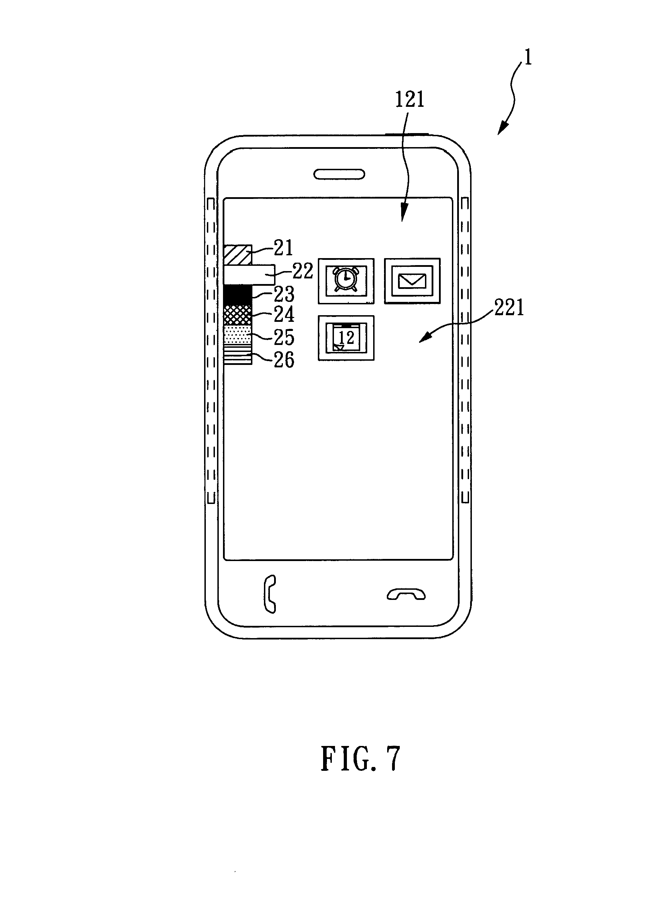

When the last position on the touch device 13 touched by the thumb 91 corresponds to the tag 22, then the controller 14 executes the function corresponding to the tag 22. As shown in FIG.7, in an embodiment of the present invention, the controller 14 enables the page 221 corresponding to the tag 22.

If the controller 14 determines that the position information does not stop at one of the positions corresponding to the plurality of tags 21-26, for example, the thumb 91 moves to a position on the touch device 13 that is not corresponding to any one of the plurality of tags 21-26, then the method goes back to step S72. In an embodiment of the present invention, if the thumb 91 accidentally touches the touch device 13, the user can move the thumb 91 to a position on the touch device 13 that is not corresponding to any one of the plurality of tags 21-26, and the controller 14 will not take any action.

The method for controlling the portable electronic device further comprises the following steps to change a direction of the arrangement of the user interface.

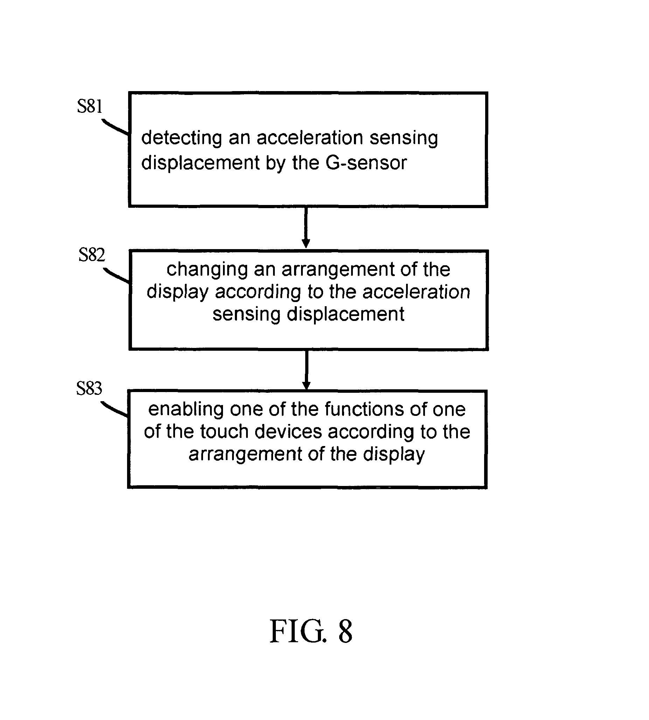

As shown in FIG.8, the process goes to step S81: detecting an acceleration sensing displacement by the G-sensor;

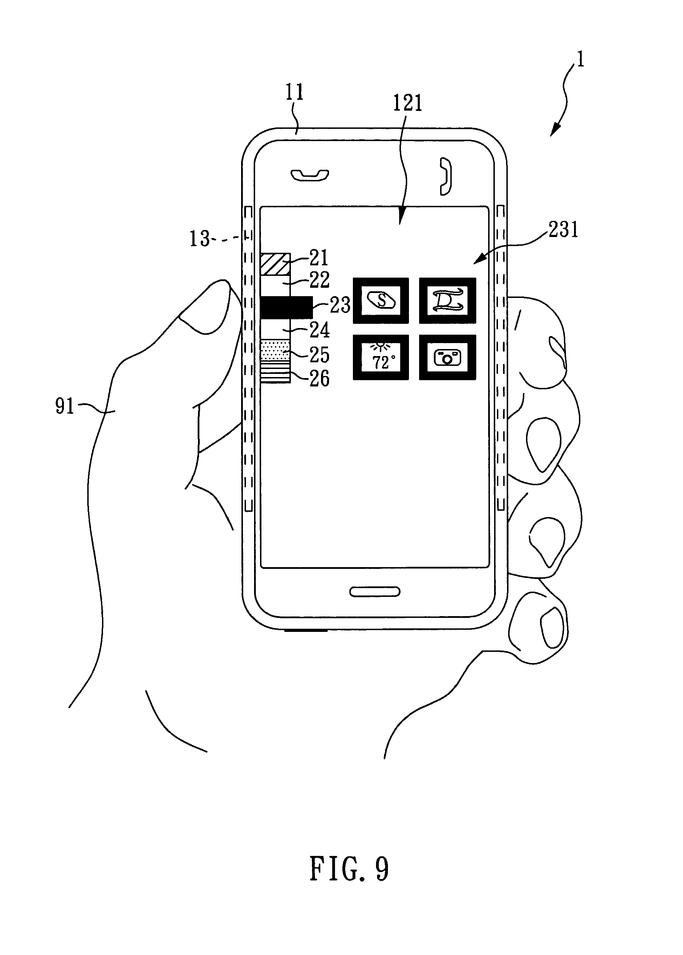

In step S81, by using the G-sensor 15 to detect the acceleration sensing displacement, it is viable to obtain a rotating angle of the portable electronic device body 11, as shown in FIG.9. In an embodiment of the present invention, the user rotates the portable electronic device body 11 by 180 degrees.

Then the method goes to step S82: changing an arrangement of the display according to the acceleration sensing displacement.

As shown in FIG.9, the controller 14 rotates the display 121 by 180 degrees according to the acceleration sensing displacement to correspond with a viewing angle of the user.

Finally the method goes to step S83: enabling one of the functions of one of the touch devices according to the arrangement of the display.

In step S83, the controller 14 enables one of the touch devices 13 corresponding to the plurality of tags 21-26 according to the positions of the plurality of tags 21-26. As shown in FIG.9, according to the arrangement of the display 121, the controller 14 disables the touch device 13 not on the side of the plurality of tags 21-26, and enables the touch device 13 (which is touched by the left thumb in FIG.9) on the side of the plurality of tags 21-26. In an embodiment of the present invention, the controller 14 enables the page 231 of the tag 23.

In an embodiment of the present invention, the portable electronic device 1 can be set for using with a left hand or a right hand, when the portable electronic device 1 is set for using with a left hand, the plurality of tags 21-26 are arranged at the left side of the display 121 with the touch device 13 on the left side of the portable electronic device body 11 enabled; when the portable electronic device 1 is set for using with a right hand, the plurality of tags 21-26 are arranged at the right side of the display 121 with the touch device 13 on the right side of the portable electronic device body 11 enabled. As the portable electronic device body 11 rotates, the corresponding touch device 13 is disabled or enabled accordingly.

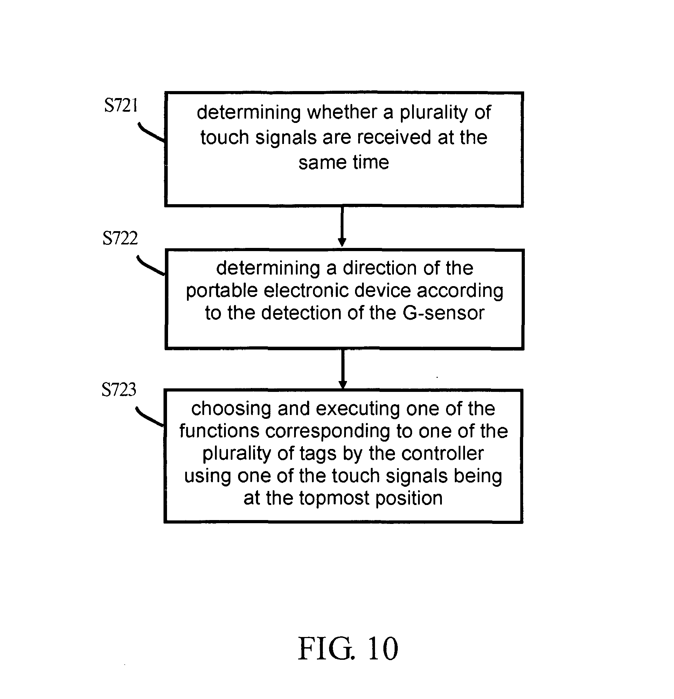

It is noted that although the portable electronic device 1 is set for using with a left hand or a right hand by default, when the user switches the portable electronic device 1 from one hand to another without rotating the portable electronic device body 11, the enabled touch device 13 can operate according to the touch signals being at the topmost position; as shown in FIG.10, after the step S72, the method can further proceed to S721: determining whether a plurality of touch signals are received at the same time.

If it is determined that a plurality of touch signals are received at the same time, in step S722: determining a direction of the portable electronic device according to the detection of the G-sensor.

Then the method goes to step S723: choosing and executing one of the functions corresponding to one of the plurality of tags by the controller using one of the touch signals being at the topmost position.

For example, when the portable electronic device 1 is set for using with a left hand, the plurality of tags 21-26 are arranged at the left side of the display 121 with the touch device 13 on the left side of the portable electronic device body 11 is enabled. Therefore, the user can use his/her left thumb to touch the touch device 13 on the left side. When the user temporarily switches the portable electronic device 1 to his/her right hand without rotating the portable electronic device body 11, then the touch device 13 on the left side accepts the touch signals (generated by the right index finger touching the left touch device 13) being at the topmost position, or any other positions. Moreover, the portable electronic device 1 can enable or disable either one of the touch devices 13 according to a user preference.

The present invention discloses a portable electronic device and a method for controlling the portable electronic device; the present invention is advantageous in: (1) eliminating the Home key to increase the available space of the portable electronic device 1; allowing the user touch the touch device 13 corresponding to the Home tag 21 to return to the Home page 211 no matter what the portable electronic device 1 is displaying or executing; (2) the user can touch the touch device 13 corresponding to the plurality of tags with one hand and access every page, thereby enhancing the usability and eliminating the need for both hands to operate the portable electronic device 1; and (3) the user can click on any tag to enter a corresponding page without the need to search folder after folder as in the prior art.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

The appending claims are incorporated in the description by reference. In spite of any specific backreference mentioned in a subclaim, subclaims refer to any of the preceding claims also.

## Claims

1. A portable electronic device (1) comprising:
a portable electronic device body (11);
a display device (12) disposed on the portable electronic device body (11) and used for displaying a display (121);
at least one touch device (13) disposed on an outside of the portable electronic device body (11), the at least one touch device (13) receiving a touch signal, wherein the touch signal comprises a position information; and
a controller (14) electrically connected with the at least one touch device (13);
when the at least one touch device (13) receives the touch signal, the at least one touch device (13) displays a plurality of tags (21, 22, 23, 24, 25, 26), wherein the position information corresponds to one of the positions of the plurality of tags (21, 22, 23, 24, 25, 26); and the controller (14) chooses and executes one of the functions of the plurality of tags (21, 22, 23, 24, 25, 26) according to the touch signal.

2. The portable electronic device (1) as claimed in Claim 1, wherein the plurality of tags (21, 22, 23, 24, 25, 26) are substantially arranged in an order on a side of the display (121), each one of the plurality of tags (21, 22, 23, 24, 25, 26) comprises a page, when the position information corresponds to one of the positions of the plurality of tags (21, 22, 23, 24, 25, 26), the controller (14) displays the page corresponding to the tag (21, 22, 23, 24, 25, 26) of the position according to the touch signal.

3. The portable electronic device (1) as claimed in Claim 1, wherein the at least one touch device (13) comprises a capacitive sensor.

4. The portable electronic device (1) as claimed in Claim 1, wherein the plurality of tags (21, 22, 23, 24, 25, 26) comprise a home tag (21) comprising a home page (211), wherein the home page (211) comprises at least one icon (2111) and at least one widget (2112).

5. The portable electronic device (1) as claimed in Claim 1, wherein the at least one touch device (13) comprises two or more than two touch devices (13), each one of at least one touch device (13) is disposed respectively and differently at each side of the portable electronic device body (11).

6. The portable electronic device (1) as claimed in Claim 5, wherein the portable electronic device (1) further comprises a G-sensor (15) electrically connected with the controller (14), the G-sensor (15) detects a rotating angle of the portable electronic device body (11), the controller (14) changes a rotating angle of the display (121) according to the rotating angle of the portable electronic device body (11) to correspond with a viewing angle of a user; and the controller (14) enables one of the functions of the plurality of tags (21, 22, 23, 24, 25, 26) of one of the at least one touch device (13) according to the positions of the plurality of tags (21, 22, 23, 24, 25, 26).

7. A method for controlling a portable electronic device (1), wherein the portable electronic device (1) comprises a portable electronic device body (11); a display device (12), and at least one touch device (13), the display device (12) is disposed on the portable electronic device body (11) and used for displaying a display (121); the at least one touch device (13) is disposed on an outside of the portable electronic device body (11), the method comprising the following steps:
displaying a plurality of tags (21, 22, 23, 24, 25, 26) on the display (121), wherein the plurality of tags (21, 22, 23, 24, 25, 26) are substantially arranged in the display (121);
receiving a touch signal by the at least one touch device (13),
wherein the touch signal comprising a position information corresponding to one of the positions of the plurality of tags (21, 22, 23, 24, 25, 26); and
choosing and executing one of the functions corresponding to one of the plurality of tags (21, 22, 23, 24, 25, 26) according to the touch signal.

8. The method for controlling a portable electronic device (1) as claimed in Claim 7, wherein the at least one touch device (13) comprises two or more than two touch devices (13), each one of the at least one touch device (13) is disposed respectively and differently at each side of the portable electronic device body (11).

9. The method for controlling a portable electronic device (1) as claimed in Claim 7, wherein the plurality of tags (21, 22, 23, 24, 25, 26) comprise a home tag (21) comprising a home page (211), wherein the home page (211) comprises at least one icon (2111) and at least one widget (2112).

10. The method for controlling a portable electronic device (1) as claimed in Claim 7, wherein the portable electronic device (1) further comprises a G-sensor (15) and a controller (14), the G-sensor (15) is electrically connected with the controller (14), the method further comprising the following steps:
detecting an acceleration sensing displacement by the G-sensor (15); changing an arrangement of the display (121) according to the acceleration sensing displacement; and
enabling one of the functions of the at least one touch device (13) according to the arrangement of the display (121).

11. The method for controlling a portable electronic device (1) as claimed in Claim 7, wherein the step of receiving a touch signal by the at least one touch device (13) further comprises the following steps:
displaying the tag (21, 22, 23, 24, 25, 26) corresponding to the position information differently from other tags (21, 22, 23, 24, 25, 26) according to the position information.

12. The method for controlling a portable electronic device (1) as claimed in Claim 7, wherein the step of receiving a touch signal by the at least one touch device (13) further comprises the following steps:
determining whether the touch signal has ended;
if the touch signal has ended, then determining whether the position information has stopped at one of the positions corresponding to the plurality of tags (21, 22, 23, 24, 25, 26); and
if the position information has stopped at one of the positions of the plurality of tags (21, 22, 23, 24, 25, 26), choosing and executing one of the functions corresponding to one of the plurality of tags (21, 22, 23, 24, 25, 26).

13. The method for controlling a portable electronic device (1) as claimed in Claim 10, wherein the step of receiving a touch signal by the at least one touch device (13) further comprises the following steps:
determining whether a plurality of touch signals are received at the same time;
if a plurality of touch signals are received at the same time, determining a direction of the portable electronic device (1) by the G-sensor (15); and
choosing and executing one of the functions corresponding to one of the plurality of tags (21, 22, 23, 24, 25, 26) by the controller (14) using one of the touch signals being at the topmost position.
